# EUROPEAN PATENT APPLICATION

(11) **EP 0 837 411 A1**
(43) Date of publication of application: **22.04.1998**
(21) Application number: 97305747.4
(22) Date of filing: 30.07.1997
(51) Int. Cl.: G06F 17/60

(54) **Remotely controlled electronic display modules**

(30) Priority: 17.10.1996 GB 9621650
(71) Applicant: Telepanel Systems Inc., Markham, Ontario L3R 5J9 (CA)
(72) Inventor: Skillen, Christopher, Toronto, M4N 3E2 (CA); Truong, Cuong Ken, Scarborough, Ontario M1V 3C5 (CA)
(74) Representative: Evans, Huw David Duncan

(57) **Abstract**

An electronic price display system has a series of electronic price display modules for displaying the prices of items and a remote control station for selectively varying the prices displayed on said modules. Each electronic price display module has means for receiving a price-varying signal from the remote control station to vary and display the price of an item in a first currency. Each electronic price display module is also capable of displaying the price of the item in another currency, and also has a currency conversion register which converts the price of an item in the first currency to the price of the item in the second currency. The currency conversion register of each electronic price display module is adjustable by a currency-conversion signal from the remote control station to enable the currency conversion rate between the first currency and the second currency in the currency conversion registers of the display modules to be simultaneously adjusted by the currency-conversion signal from the remote control station.

## Description

This invention relates to electronic price display systems which have a series of electronic price display modules for displaying the prices of items and a remote control station for selectively varying the prices displayed on the modules.

An electronic price display module is described in British Patent No. 2164777, and one manner in which such display modules can be remotely controlled is described in British Patent Nos. 2197564 and 2228812.

In some countries, for example in Europe, it is advantageous to be able to display prices of items not only in the currency of the country in which the display modules are located (a local country) but also in the currency of one or more adjacent countries.

It is therefore an object of the present invention to provide an efficient manner of displaying item prices in different currencies.

The present invention provides an electronic price display system having a series of electronic price display modules for displaying the prices of items and a remote control station for selectively varying the prices displayed on the modules, each display module having means for receiving a price-varying signal from the remote control station to vary and display the price of an item in the first currency, each display module also being capable of displaying the price of the item in another currency, and each display module also having a currency conversion register which converts the price of an item in the first currency to the price of the item in the second currency, the currency conversion register of each display module being adjustable by a currency-conversion signal from the remote control station to enable the currency conversion rate between the first currency and the second currency in the currency conversion register of the display modules to be simultaneously adjustable by the currency conversion signal from the remote control station.

Thus, when a currency exchange rate varies, the relevant currency conversion register in all the display modules can be simultaneously adjusted from the remote control station. This is clearly much more advantageous than the slow and time consuming process of sending new prices in another currency to each display module when a currency exchange rate varies.

Each display module may have a solar panel mounted on the rear thereof behind a transflective liquid crystal display which reflects some light incident on the front of the module and transmits some light therethrough the solar panel. Each display module may have a battery providing electrical power therefor, with a solar panel providing an alternative source of electrical energy to power the module.

Each display module may be also capable of displaying the price of a store or generic brand item as well as the price of a name brand of the item, with the remote control station having the capability of signalling the relevant information to the display modules.

The remote control station may have means for linking one or more store or generic brand items to a name brand item using a product identification code whereby, when any linked products have a price change, the information is automatically send to all other linked products.

Embodiments of the invention will now be described, by way of example, with reference to the accompanying drawings, of which:
Fig. 1 is a diagrammatic view showing a portion of the circuitry of a display module in accordance with one embodiment of the invention,
Fig. 2 is a front view of a display module incorporating the circuitry of Fig. 1 for use in Europe in a first mode,
Fig. 3 is a similar view of the display module of Fig. 2 in a second mode,
Fig. 4 is a similar view of the display module of Fig. 2 in a third mode,
Fig. 5 is a similar view of a display module with a solar panel mounted thereon,
Fig. 6 is a side view of a display module of Fig. 5,
Fig. 7 is an electrical circuit diagram showing the electrical circuit associated with the solar panel and the module battery,
Fig. 8 is a diagrammatic view showing a portion of the circuitry of a display module in accordance with another embodiment of the invention,
Fig. 9 is a front view of a display module incorporating the circuitry of Fig. 8 in a first mode, and
Fig. 10 is a similar view of the display module of Fig. 9 in a second mode.

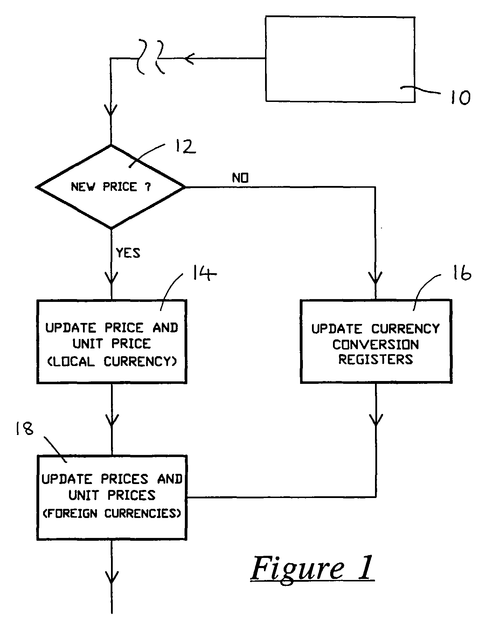

Referring to the drawings, Fig. 1 shows the relevant part of the electrical circuitry of an electronic price display module in accordance with one embodiment of the invention. Data including a new item price or a new currency exchange rate is sent to every module from a remote control station 10 and is received by a memory 12 in each module which determines whether or not the data relates to a new price for the display module. If "yes", the data is passed to a signaller 14 in module which sends a signal of the new item price and unit price in the local currency to the display. If "no", the data therefore relates to a change in currency exchange rate and is sent to update the relevant currency conversion register 16 of the display module. Each display module is then caused to be capable of displaying the updated item price and unit price in the other currency at the new exchange rate by a signal from a further signaller 18 in the module.

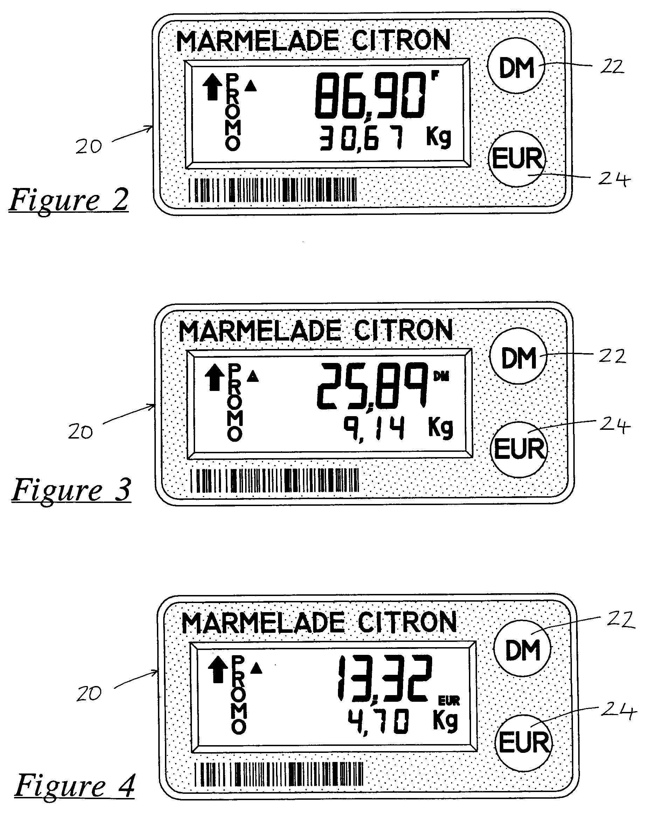

Fig. 2 shows the front of a display module 20 incorporating the circuitry of Fig. 1 for use in Europe, the item price and the unit price, i.e. price per kilogram in this case, being shown in French Francs. The corresponding prices in Deutsch Marks or European Currency Units can be shown by pressing the appropriately marked buttons 22, 24 as shown in Figs. 3 and 4 respectively. The display reverts to the French Franc display after a pre-determined time.

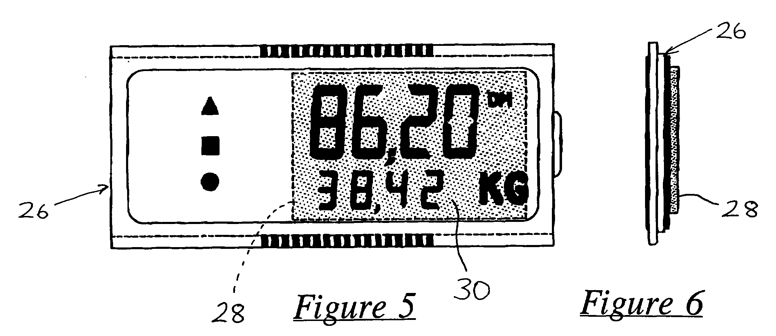

Figs. 5 and 6 show an alternative display module 26 in accordance with another embodiment of the invention which has a solar panel 28 secured to the rear face thereof, the display module having a transflective Liquid Crystal Display (LCD) 30 which is reflective to some incident light and which transmits other incident light to the solar panel 28 which provides electrical energy to the display module 26 to prolong the life of the battery therein. The solar panel 28 is hidden from view, and its placement minimizes the frontal profile of the module.

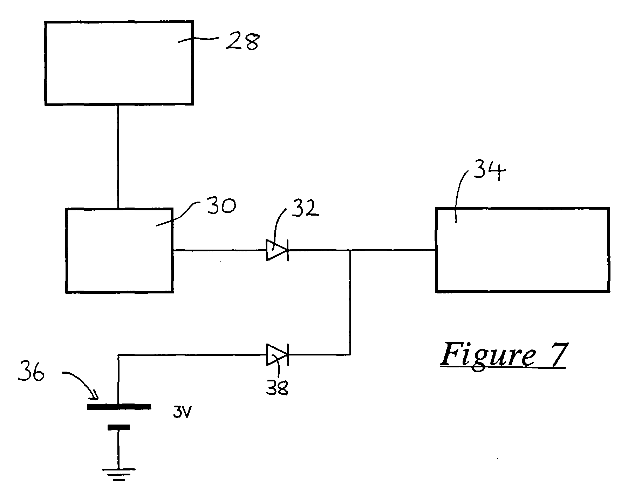

Fig. 7 shows the electrical circuit associated with the solar panel 28. The electrical output from the solar panel 28 passes to a regulator 30 and then through a one-way diode 32 to the main circuitry 34 of the display module, of the circuitry being identified as ESL circuitry because the display modules are known in the art as Electronic Shelf Labels. The battery 36 is a lithium battery which is not rechargeable, and is therefore connected to the main module circuitry 34 through a one-way diode 38 in the manner indicated so that electrical power from the solar panel 28 does not reach the battery 36.

It is also possible, in accordance with a further embodiment of the invention, to provide each display module with a capability of showing the price of the store or generic brand item and the price of a name brand of the item to enable a shopper to compare the two prices, with the remote control station also being provided with the capability of signalling the relevant information to the display modules accordingly. Such information, which may be item prices or unit prices, may be displayed on the display module of the store or generic brand item and/or the display module of the name brand item. The information may be continuously displayed, periodically cycled or accessed by the computer by pressing a button.

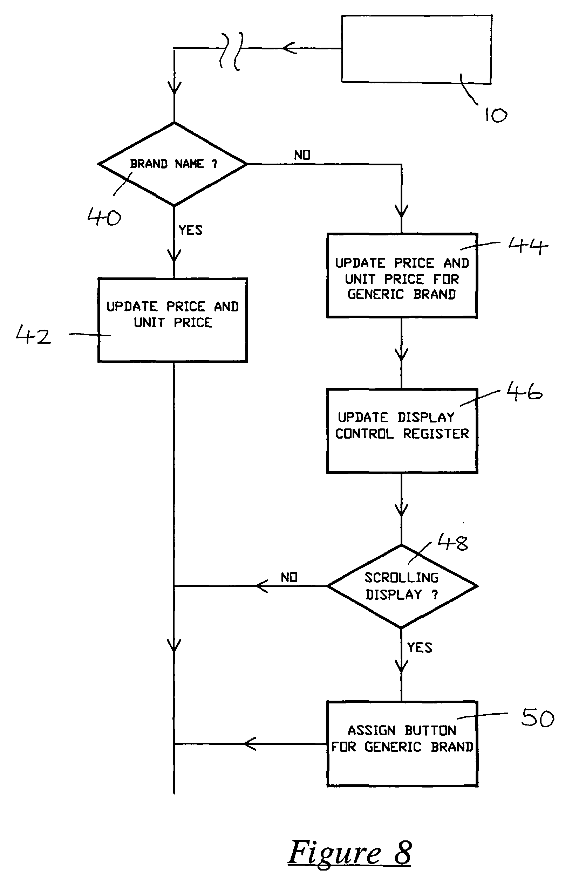

Fig. 8 shows the relevant part of the display module circuitry in accordance with a further embodiment of the invention. Data including a new price and unit price for a brand name item or a generic brand item is sent to every module from the remote control station 10 and is received by a memory 40 in each module which determines whether or not the data relates to a brand name or not. If "yes", the data is passed to a signaller 42 which sends a signal of the new price and unit price to update the brand name part of the display. If "no", the data therefore relates to a generic brand and is sent to a further signaller 44 which sends a signal of the new price and unit price to update the generic brand portion of the display.

The signaller 44 also sends an appropriate signal to an update display control register 46 which the signaller 44 also sends an appropriate signal to an update display control register 46 which then sends an appropriate signal to a scrolling display memory 48 which determines whether the signal is a scrolling signal or not. If "no", a signal is sent to the output of the signaller 42. If "yes", a signal is sent first to a button 50 and then to the output of the signaller 42. If button 50 is pushed, the generic brand price is displayed.

The remote control station 10 may logically link one or more store or generic brand items to a name brand item using the Universal Product Code (UPC) and/or any other product identification code such that, when any linked products have a price change, this information is automatically sent to all other linked products.

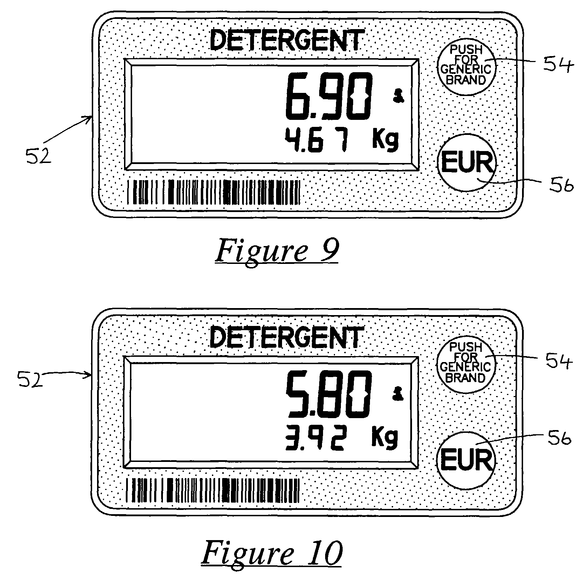

Fig. 9 shows the front of a display module 52 incorporating the circuitry of Fig. 8 for use in Europe, the brand name price and unit price being shown in English Pounds. The price and unit price of a generic brand can be shown by pressing a button 54 which produces the display shown in Fig. 10. The display module 52 also has a button 56 which can be pushed to show the prices in European currency units.

## Claims

1. An electronic price display system having a series of electronic price display modules for displaying the prices of items and a remote control station for selectively varying the prices displayed on said modules,
each electronic price display module having means for receiving a price-varying signal from the remote control station to vary and display the price of an item in a first currency,
each electronic price display module also being capable of displaying the price of the item in another currency, and
each electronic price display module also having a currency conversion register which converts the price of an item in the first currency to the price of the item in the second currency,
the currency conversion register of each electronic price display module being adjustable by a currency-conversion signal from the remote control station to enable the currency conversion rate between the first currency and the second currency in the currency conversion registers of the display modules to be simultaneously adjusted by the currency-conversion signal from the remote control station.

2. An electronic price display system according to claim 1 wherein each electronic price display module has a solar panel mounted on the rear thereof behind a transflective liquid crystal display member which reflects some light incident thereon and transmits other incidented light to the solar panel.

3. An electronic price display system according to claim 2 wherein each electronic price display module has a battery providing electrical power therefor, and the solar panel provides an alternative source of electrical energy to power the module.

4. An electronic price display system according to claim 1 wherein each electronic price display module is capable of displaying the price of a store or generic brand item as well as the price of a name brand of the item, and the remote control station has the capability of signalling the relevant information to the display modules.

5. An electronic price display system according to claim 4 wherein the remote control station has means linking one or more store or generic brand items to a name brand item using a product identification code whereby, when any linked products have a price change, the information is automatically sent to all other linked products.

6. An electronic price display module for displaying the price of an item, said module having means for receiving a price-varying signal from a remote control station to vary and display the price of an item in a first currency and also being capable of displaying the price of the item in another currency, the module also having a currency conversion register which converts the price of the item in the first currency to the price of the item in the second currency, the currency conversion register being adjustable by a currency-conversion signal from the remote control station.

7. An electronic price display module according to claim 6 also having a solar panel mounted on the rear thereof behind a transflective liquid crystal display which displays the item price, the liquid crystal display being reflective to some light incident thereon and transmitting some light therethrough to the solar panel.

8. An electronic price display module according to claim 7 also having a battery providing electrical power therefor, the solar panel providing an alternative source of electrical energy to power the module.

9. An electronic price display module according to claim 6 which is also capable of displaying the price of a store or generic brand item as well as the price of a name brand of the item.
